(19) **Europäisches Patentamt**

**European Patent Office**

**Office européen des brevets**

(11) **EP 1 144 304 B1**

(12) **EUROPÄISCHE PATENTSCHRIFT**

(45) Veröffentlichungstag und Bekanntmachung des Hinweises auf die Patenterteilung:
**13.07.2005 Patentblatt 2005/28**

(21) Anmeldenummer: **99944391.4**

(22) Anmeldetag: **13.08.1999**

(51) Int Cl.$^7$: **C01B 17/94**

(86) Internationale Anmeldenummer:
**PCT/EP1999/005954**

(87) Internationale Veröffentlichungsnummer:
**WO 2000/012429 (09.03.2000 Gazette 2000/10)**

(54) **VERFAHREN ZUM ENTFERNEN VON STICKSTOFFOXIDEN AUS NITROSYLSCHWEFELSÄURE**

METHOD FOR REMOVING NITROGEN OXIDES FROM NITROSYL SULPHURIC ACID

PROCEDE POUR ELIMINER DES OXYDES D'AZOTE CONTENUS DANS DE L'ACIDE SULFURIQUE DE NITROSYLE

(84) Benannte Vertragsstaaten:
**AT BE CH CY DE DK ES FI FR GB GR IE IT LI LU MC NL PT SE**

(30) Priorität: **01.09.1998 DE 19839674**

(43) Veröffentlichungstag der Anmeldung:
**17.10.2001 Patentblatt 2001/42**

(73) Patentinhaber: **Sachtleben Chemie GmbH**
**47198 Duisburg (DE)**

(72) Erfinder:
• **HOLLNAGEL, Achim**
**D-60599 Frankfurt am Main (DE)**
• **SCHMIDT, Georg**
**D-60431 Frankfurt am Main (DE)**
• **FACH, Roland**
**D-46514 Schermbeck (DE)**
• **WAGNER, Hartmut**
**D-47441 Moers (DE)**

(74) Vertreter: **KEIL & SCHAAFHAUSEN**
**Patentanwälte,**
**Cronstettenstrasse 66**
**60322 Frankfurt am Main (DE)**

(56) Entgegenhaltungen:
WO-A-98/02381        GB-A- 348 866
GB-A- 667 901        GB-A- 671 403
US-A- 4 155 989        US-A- 5 389 354

• **DATABASE WPI Section Ch, Week 9115 Derwent Publications Ltd., London, GB; Class E36, AN 91-108779 XP002027953 & SU 1 586 996 A (GORKI POLY), 23. August 1990 (1990-08-23)**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft ein Verfahren zum Entfernen von Stickstoffoxiden aus Nitrosylschwefelsäure nach dem Oberbegriff des Anspruchs 1.

Ein solches Verfahren ist aus WO-A-98/02 381 bekannt. Nitrosylschwefelsäure (HNOSO$_4$) fällt bei der großtechnischen Produktion von Schwefelsäure aus SO$_2$- haltigen Verbrennungs- oder Röstgasen an, da diese Gase auch Stickstoffoxide enthalten. Einzelheiten der Schwefelsäure-Herstellung sind zum Beispiel in Ullmann's Encyclopedia of Industrial Chemistry, 5. Auflage, Band A25, Seiten 644 bis 656 beschrieben.

Beim aus WO-A-98/02 381 bekannten Verfahren enthält das aus der Strippzone abgezogene Gasgemisch störende Gasbestandteile, insbesondere N$_2$O und NO, die es nicht ratsam erscheinen lassen, dieses Gasgemisch direkt in eine Anlage zur Herstellung von Schwefelsäure einzuleiten, da dies die Bildung von Nitrosylschwefelsäure erhöht.

Aus der US 5,389,354 ist ein Verfahren zur Herstellung von Oleum bekannt, bei dem Schwefel zunächst mit Sauerstoff verbrannt wird, anschließend das so erhaltene Schwefeldioxid katalytisch zu Schwefeltrioxid umgesetzt wird, bevor das Schwefeltrioxid in Oleum bzw. Schwefelsäure absorbiert wird, wobei bei der Verbrennung des Schwefels ein Gasgemisch enthaltend Schwefeldioxid und maximal 5.000 ppm. entsprechend 0,5 %, Stickoxide zugesetzt werden.

Der Erfindung liegt die Aufgabe zugrunde, die Stickoxide aus dem aus der Strippzone abgezogenen Gasgemisch weitgehend zu entfernen, damit das resultierende Gasgemisch bei der Schwefelsäureherstellung weiterverwendet werden kann.

Erfindungsgemäß wird diese Aufgabe durch die Merkmale des Anspruchs 1 gelöst. Weitere Ausgestaltungen der Erfindung sind Gegenstand der Unteransprüche.

Die Erhitzung kann zum Beispiel in einem Brenner erfolgen, und besonders vorteilhaft ist es, eine vorhandene Röstung oder Verbrennung als Erhitzungszone zu nutzen.

Üblicherweise enthält das aus der Strippzone abgezogene Gasgemisch, wasserfrei gerechnet, 0,02 bis 2 Vol.-% N$_2$O und 0,01 bis 1 -Vol. -% NO. In der Erhitzungszone wird dafür gesorgt, daß der Gehalt an N$_2$O und NO, bezogen auf die Menge des eingeleiteten Gasgemisches, auf die Hälfte oder weniger absinkt oder auch praktisch ganz verschwindet.

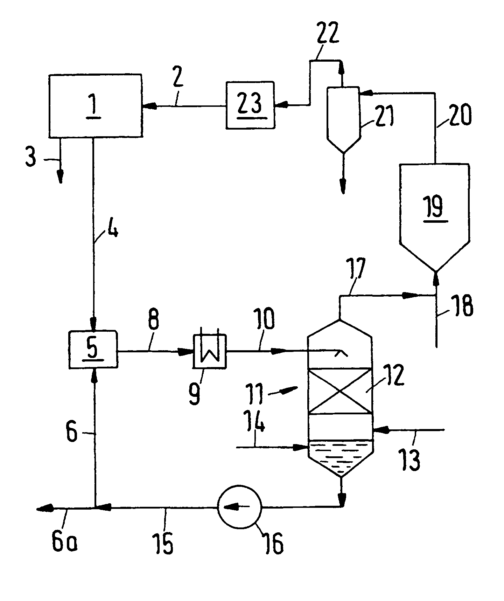

Ausgestaltungsmöglichkeiten des Verfahrens werden mit Hilfe der Zeichnung erläutert. Die Zeichnung zeigt ein Fließschema des verfahrens.

In einer Anlage (1) zur Erzeugung von Schwefelsäure aus SO$_2$-haltigem Gas, das in der Leitung (2) herangeführt wird, erzeugt man Produkt-Schwefelsäure, die in der Leitung (3) abgezogen wird. Gleichzeitig entsteht ein Kondensat, dessen Hauptbestandteil Nitrosylschwefelsäure ist, welches man in der Leitung (4) abzieht. In einer Mischzone (5) mischt man das Kondensat mit Schwefelsäure aus der Leitung (6), in welcher SO$_2$ gelöst ist. Üblicherweise ist die Schwefelsäure der Leitung (6) mit SO$_2$ gesättigt, und der H$_2$SO$_4$-Gehalt der wäßrigen Lösung liegt im Bereich von 5 bis 40 Gew.-%.

Formal betrachtet, kann man die Nitrosylschwefelsäure mit SO$_2$ und Wasser zu Schwefelsäure und N$_2$ umsetzen. In der Mischzone (5) läuft jedocn u. a. auch die Reaktion

$$SO_2 + 2HNOSO_4 + 2H_2O \rightarrow 3H_2SO_4 + 2NO$$

ab. Man findet, daß das Säuregemisch, welches man in der Mischzone (5) erhält und in der Leitung (8) zunächst zu einem indirekten Kühler (9) führt, NO und auch N$_2$O enthält. Mit Temperaturen von 20 bis 100°C und vorzugsweise höchstens 70°C gibt man das Säuregemisch durch die Leitung (10) in eine Strippkolonne (11). Die Kolonne enthält einen Bereich (12) mit gas- und flüssigkeitsdurchlässigen Böden oder Füllkörpern, um den Kontakt zwischen Gas und Flüssigkeit zu intensivieren. Als Strippgas leitet man SO$_2$-haltiges Gas in den unteren Bereich der Kolonne (11), welches in der Leitung (13) herangeführt wird. Der Druck in der Kolonne (11) liegt üblicherweise im Bereich von 0,9 bis 10 bar. Im Sumpf der Kolonne (11) sammelt sich Schwefelsäure an, deren Konzentration man durch Zugabe von Wasser aus der Leitung (14) einstellt. Diese Schwefelsäure wird durch die Leitung (15) mit Hilfe der Pumpe (16) abgezogen und mindestens teilweise durch die Leitung (6) in die Mischzone (5) geführt. Ein Überschuß an Schwefelsäure wird in der Leitung (6a) abgezogen.

Aus dem oberen Bereich der Kolonne (11) zieht man ein Gasgemisch in der Leitung (17) ab, welches SO$_2$, N$_2$O und NO enthält. Dieses Gasgemisch wird einem O$_2$-haltigen Gas zugegeben, das in der Leitung (18) in den Röstofen (19) geführt wird. Im Ofen (19) wird in einer Wirbelschicht sulfidisches Erz bei Temperaturen von 750 bis 1100°C geröstet, um SO$_2$-haltiges Gas zu erzeugen, welches in der Leitung (20) abströmt. Im Röstofen (19) verweilt das Gas der Leitung (17) 1 bis 10 sec lang und üblicherweise mindestens für 2 sec, wobei N$_2$O und NO weitgehend zu Stickstoff und Sauerstoff zerfallen und hierbei nicht erneut NO$_x$ gebildet wird. Das Gas aus der Leitung (20) wird zur Entstaubung durch einen Zyklon (21) geführt und strömt dann in der Leitung (22) zu einer Gasreinigung (23), die in an sich bekannter Weise als Naßwäsche oder als Naßwäsche in Kombination mit einer elektrischen Gasreinigung ausgeführt ist. Schließlich wird das SO$_2$-haltige Gas in der Leitung (2) zur Schwefelsäureherstellung (1) geführt.

Beispiel:

In einer der Zeichnung entsprechenden Verfahrensführung wird folgendermaßen gearbeitet, wobei die Daten teilweise berechnet sind:

Aus der Anlage (1) werden in der Leitung (4) 79 1/h Kondensat abgeführt, welches Nitrosylschwefelsäure entsprechend einer $N_2O_3$-Menge von 6,5 kg/h enthält. Dem Mischer (5) werden durch die Leitung (6) 12300 kg/h Schwefelsäure mit 30 Gew.-% $H_2SO_4$ und 1,4 g/l $SO_2$ zugegeben. 550 kg/h dieser Säure zieht man in der Leitung (6a) ab und führt sie in die Anlage (1). Die Säure der Leitung (10) weist eine Temperatur von 37°C auf, sie enthält 1,23 g/l $SO_2$. Der Strippkolonne (11) werden durch die Leitung (14) 465 kg/h Wasser und durch die Leitung (13) 450 $Nm^3$/h eines Gasgemisches mit 6,2 Vol.% $SO_2$ zugeführt, welches aus dem Gemisch der Leitung (2) abgezweigt wurde. Im Gasgemisch der Leitung (17) findet man u.a. 3800 ppm $N_2O$, 1800 ppm NO und 5,5 Vol. % $SO_2$. Dieses Gemisch wird zusammen mit 38000 $Nm^3$/h Luft in eine Pyritröstung (19) eingespeist, wo die Gasverweilzeit 5 sec beträgt. Im $SO_2$-reichen Gasgemisch der Leitung (20), das eine Temperatur von 960°C aufweist, finden sich noch 2 ppm $N_2O$ und 100 ppm NO.

[0015] Falls man die Nitrosylschwefelsäure (4) auf andere Weise beseitigen würde, z.B. durch Zugabe von Hydrazin, wobei dann u.a. die Leitung (17) entfallen würde, findet man in der Leitung (20) dennoch einen NO-Gehalt von 90-95 ppm, der zur Bildung von Nitrosylschwefelsäure in der Anlage (1) führt. Bei der erfindungsgemäßen Arbeitsweise wird die ganze anfallende Nitrosylschwefelsäure ohne Zugabe von Fremdchemikalien beseitigt.

## Patentansprüche

1. Verfahren zum Entfemen von Stickoxiden aus Nitrosylschwefelsäure durch Mischen der Nitrosylschwefelsäure mit $SO_2$ enthaltender Schwefelsäure in einer Mischzone, wobei man aus der Mischzone ein Säuregemisch abzieht und es einer Strippzone aufgibt, in welche man gleichzeitig $SO_2$-haltiges Gas einleitet, wobei das $SO_2$-haltige Gas mindestens teilweise aufwärts durch das Säuregemisch strömt, vom oberen Bereich der Strippzone ein $SO_2$ und Stickoxide enthaltendes Gasgemisch abgezogen und vom unteren Bereich der Strippzone $SO_2$-haltige Schwefelsäure abgeleitet und mindestens teilweise in die Mischzone geleitet wird, **dadurch gekennzeichnet, dass** man das Gasgemisch mit einer Temperatur im Bereich von 20 bis 100°C aus der Strippzone abzieht und es durch eine Erhitzungszone leitet, in welcher das Gasgemisch 1 bis 10 Sekunden verweilt und auf Temperaturen im Bereich von 700 bis 1300°C erhitzt wird, und die Stickoxidmoleküle unter diesen Bedingungen weitgehend thermisch zerfallen lässt.

2. Verfahren nach Anspruch 1, **dadurch gekennzeichnet, dass** das aus der Strippzone abgezogene Gasgemisch, wasserfrei gerechnet, 0,02 bis 2 Vol.-% $N_2O$ enthält und mindestens 50 % des $N_2O$ in der Erhitzungszone zerstört werden.

3. Verfahren nach einem der vorhergehenden Ansprüche, **dadurch gekennzeichnet, dass** als Erhitzungszone eine Röstung oder Verbrennung von Schwefel oder schwefelhaltiger Feststoffe zur Erzeugung eines $SO_2$-haltigen Gases verwendet wird.

4. Verfahren nach einem der vorhergehenden Ansprüche, **dadurch gekennzeichnet, dass** die vom unteren Bereich der Strippzone abgezogene Schwefelsäure mit $SO_2$ gesättigt ist.

## Claims

1. A process of removing nitrogen oxides from nitrosyl sulphuric acid with $SO_2$-containing sulphuric acid in a mixing zone, where an acid mixture is withdrawn from the mixing zone and charged to a stripping zone, into which $SO_2$-containing gas is introduced at the same time, where the $SO_2$-containing gas at least partly flows upwards through the acid mixture, from the upper portion of the stripping zone a gas mixtures containing $SO_2$ and nitrogen oxides is withdrawn, and from the lower portion at the stripping zone $SO_2$-containing sulphuric acid is withdrawn and at least partly introduced into the mixing zone, **characterized in that** the gas mixture is withdrawn from the stripping zone with a temperature in the range from 20 to 100°C and passed through a heating zone, in which the gas mixture dwells for 1 to 10 seconds and is heated to temperatures in the range from 700 to 1300°C, and that the nitrogen oxide molecules are allowed to be substantially decomposed under these conditions.

2. The process as claimed in claim 1, **characterized in that** the gas mixture withdrawn from the stripping zone contains 0,02 to 2 vol.-% $N_2O$, calculated anhydrous, and at least 50 % of the $N_2O$ are destroyed in the heating zone.

3. The process as claimed in any of the preceding claims, **characterized in that** as heating zone there is used a roasting or combustion of sulphur or sulphur-containing solids for producing a $SO_2$-containing gas.

4. The process as claimed in any of the preceding claims, **characterized in that** the sulphuric acid withdrawn from the lower portion of the stripping zone is saturated with $SO_2$.

## Revendications

1. Procédé pour éliminer des oxydes azotiques contenus dans l'acide nitrosyle sulfurique en mélangeant dans une zone de mélange l'acide nitrosyle sulfurique avec de l'acide sulfurique contenant du $SO_2$, on prélève un mélange acide de la zone de mélange que l'on amène dans une zone de stripage dans laquelle on insuffle simultanément un gaz contenant du $SO_2$, le gaz contenant du $SO_2$ s'écoulant au moins partiellement vers le haut à la travers le mélange acide, un mélange gazeux contenant du $SO_2$ et des oxydes azotiques est prélevé de la partie supérieure de la zone de stripage et de l'acide sulfurique contenant du $SO_2$ est évacué de la partie inférieure de la zone de stripage et dirigé au moins partiellement vers la zone de mélange, **caractérisé en ce que** l'on prélève le mélange gazeux de la zone de stripage à une température comprise entre 20 et 100 °C et qu'on le dirige à la travers une zone de chauffage dans laquelle le mélange gazeux reste 1 à 10 secondes et est chauffé à des températures situées entre 700 et 1300 °C, et les molécules d'oxyde azotique se décomposent thermiquement pratiquement entièrement dans ces conditions.

2. Procédé selon la revendication 1, **caractérisé en ce que** le mélange gazeux prélevé de la zone de stripage comprend 0,02 à 2 pourcent en volume de $N_2O$, calculé sans eau, et au moins 50 % du $N_2O$ sont détruits dans la zone de chauffage.

3. Procédé selon l'une des revendications précédentes, **caractérisé en ce que** l'on utilise comme zone de chauffage une calcination ou une combustion de souffre ou de solides contenant du souffre pour générer un gaz contenant du $SO_2$.

4. Procédé selon l'une des revendications précédentes, **caractérisé en ce que** l'acide sulfurique évacué de la partie inférieure de la zone de stripage est saturé en $SO_2$.